# EUROPEAN PATENT APPLICATION

(11) **EP 1 160 124 A1**
(43) Date of publication of application: **05.12.2001**
(21) Application number: 00127224.4
(22) Date of filing: 15.12.2000
(51) Int. Cl.: B60N 2/48

(54) **Pillow device**

(30) Priority: 31.05.2000 CN 00236016
(71) Applicant: Lin, Chang-San, Sanchung City, Taipei (TW)
(72) Inventor: Lin, Chang-San, Sanchung City, Taipei (TW)
(74) Representative: UEXKÜLL & STOLBERG

(57) **Abstract**

A pillow device can be adhered to the pillow of a car seat is disclosed. The pillow device includes an adjustable or inflatable soft portion for supporting the neck of a passenger, a head supporting portion for preventing the head to turn aside. A ring sticky buckle serves to fix the pillow device on the pillow of a car seat so that other than the original function of a pillow, the pillow device of the present invention has a further function of protecting the head and neck of a passenger so as to improve the quality in sleep.

## Description

### FIELD OF THE INVENTION

The present invention relates to a safety pillow, and especially to a pillow device of a car seat which is helpful to the safety of a passenger sleeping in a moving car.

### BACKGROUND OF THE INVENTION

Currently, the primary concerns in the decoration of a car put a great emphasis on the elegance and practice use. Most of the designs are concentrated on the instrument panel, decorating textures, safety air bag, safety strip, comfort of the seat of the driver. However, the sleeping in the car which troubles the passengers has no means to solve this problem. Therefore, the safety and comfort in sleep is a problem eagerly to be resolved.

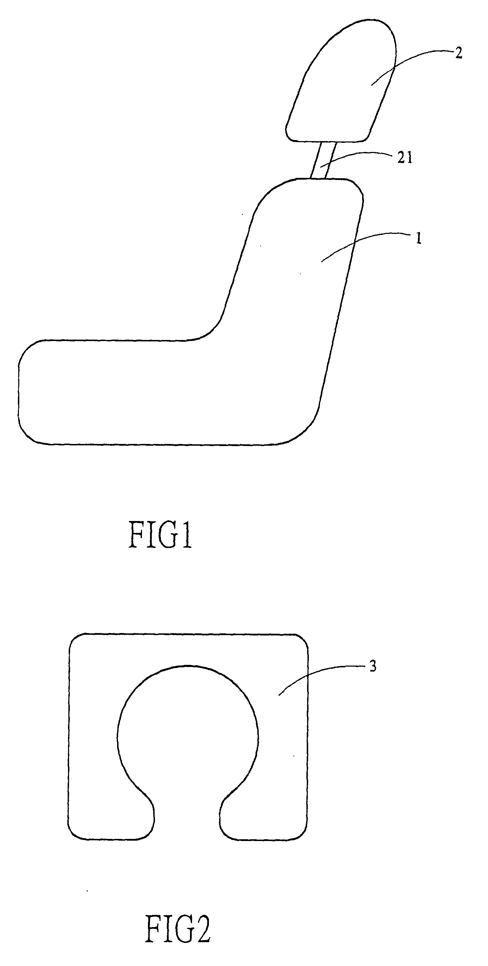

In the prior art, almost no design aims at the passenger pillow of a car seat. Referring to Fig. 1, a lateral view of a general car seat is illustrated. In the prior art, the pillow 2 is arranged at the upper side of a car seat 1 by a supporting rod 2. The elevation of the pillow 2 is adjustable to meet the head of a passenger. However, most of the pillow is designed to protect the passenger from being impacted, while the pillow in the prior art without any neck supporter and the function of preventing the head to turn laterally so that as the passenger sleeps as the car is driven, the head or neck of the passenger is possible hurt or feel ache due to dramatic vibration from turning or braking abruptly.

Thus, the current pillow of a car seat has a serious defect. This defect will induce a dramatic accident as the passenger sleep in a car. Since as a passenger sleeps in a car, he (or she) is generally without any alert to the accident from the environment. Therefore, the head and neck of the passenger is possible hurt. Moreover, passengers often feel uncomfortable, moreover, has aches in head and neck. These are caused from an uncomfortable sleep in the car.

From a statistic result, most of passengers must sleep for a while in a long period as taking a car. Therefore, there is an eager demand for a novel pillow device which may improve the defect in the prior art.

Referring to Fig. 2, an inflation device for protecting the neck of passenger is illustrated. The inflation device 3 is formed with an opening which may wind around the neck of the passenger to avoid the neck to be pressed since the head turns aside. However, this device will make the user feel uncomfortable because of being wound around. Moreover, as the head turns aside, the beats of the artery in the head will make the passenger feel uncomfortable and is not beneficial to sleep. Furthermore, since device 3 directly winds around the neck of the passenger, the defect of sleeping laterally of a passenger can not be corrected. Therefore, there is an eager demand for a pillow device to help the user to sleep in a correct pose.

### SUMMARY OF THE INVENTION

Accordingly, the primary object of the present invention is to provide a pillow device which can support the neck of the passenger and prevent the head of the passenger to turn aside.

Another object of the present invention is to provide a pillow device which can be attached to a car seat so as to support the neck of the passenger and prevent the head of the passenger to turn aside to press the nerves in the neck.

A further object of the present invention is to provide a pillow device which may improve the car seat, and can support the neck of the passenger and prevent the head of the passenger to turn aside.

The present invention provides a pillow device which can improve the defects in the prior arts, such as the pillow in the prior art without any neck supporter and the function of preventing the head to turn laterally so that as the passenger sleeps in a moving car, the head or neck of the passenger is possible hurt or feel ache due to dramatic vibration from turning or braking a car abruptly. Therefore, the present invention provides a pillow device which can be adhered to the pillow of a car seat is disclosed. The pillow device includes an adjustable or inflatable soft portion for supporting the neck of a passenger, a head supporting portion for preventing the head to turn laterally. A ring sticky buckle serves to fix the pillow device on the pillow of a car seat.

In another embodiment, the car seat is improved so that an adjustable or inflatable soft portion for supporting the neck of a passenger, a head supporting portion for preventing the head to turn laterally is installed at lateral side of the pillow so that the car seat is more comfortable.

The various objects and advantages of the present invention will be more readily understood from the following detailed description when reading in conjunction with the appended drawing.

### BRIEF DESCRIPTION OF THE DRAWINGS

Fig. 1 is a lateral view of the pillow in a prior art car seat.

Fig. 2 is an elevation view showing a prior art inflation device for protecting the head and neck of a passenger.

Fig. 3 is an exploded perspective view of the first embodiment of the pillow device in the present invention.

Fig. 4 is an assembled perspective view of the first embodiment of the pillow device in the present invention.

Fig. 5 is a perspective view showing the second embodiment of the pillow device in the present invention.

Fig. 6 is a perspective view showing the design of the embodiment of Fig. 5 being fixed to the pillow of a car seat.

Fig. 7 is a perspective view showing the pillow device of the present invention before being used.

Fig. 8 is a perspective view showing the use of the pillow device in the present invention.

Fig. 9 is a lateral view of the head strip of the pillow device in the present invention.

Fig. 10 is an elevation view showing the pillow device of the present invention with a slidable supporting frame.

### DETAILED DESCRIPTION OF THE PREFERRED EMBODIMENTS

The present invention will be fully described in the following with appended figures, while these descriptions are just used to cause those skilled in the art to understand the present invention instead of confining the spirit and scope of the present invention, whereas the present invention is defined in the appended claims as a part of this specification.

The present invention relates to a pillow device which is used in the condition that as the driver or passenger desires to take a rest during a period of driving a car. The pillow device is designed to protect and comfort the neck of the user.

In the present invention, a pillow device is illustrated, which includes two plastic curved plates (adjustable in width), an elevation angle adjuster (adjustable the elevation angle for protecting the neck bone), a cover filled with soft sponge and a sticky strip. The pillow device of the present invention can be attached to the seat of a car easily. The head and neck of the passenger can be fixed by the two plastic curved plates and elevation angle adjuster. Therefore, the passenger may sleep comfortably with a preferred pose without inducing the neck to bend laterally so as to put a force to the nerves of the head and neck. As a consequent, the passenger has a good sleep. Meanwhile, as the car is moving, the passenger may avoid to suffer from dramatic jumps and vibrations during turning or braking a car.

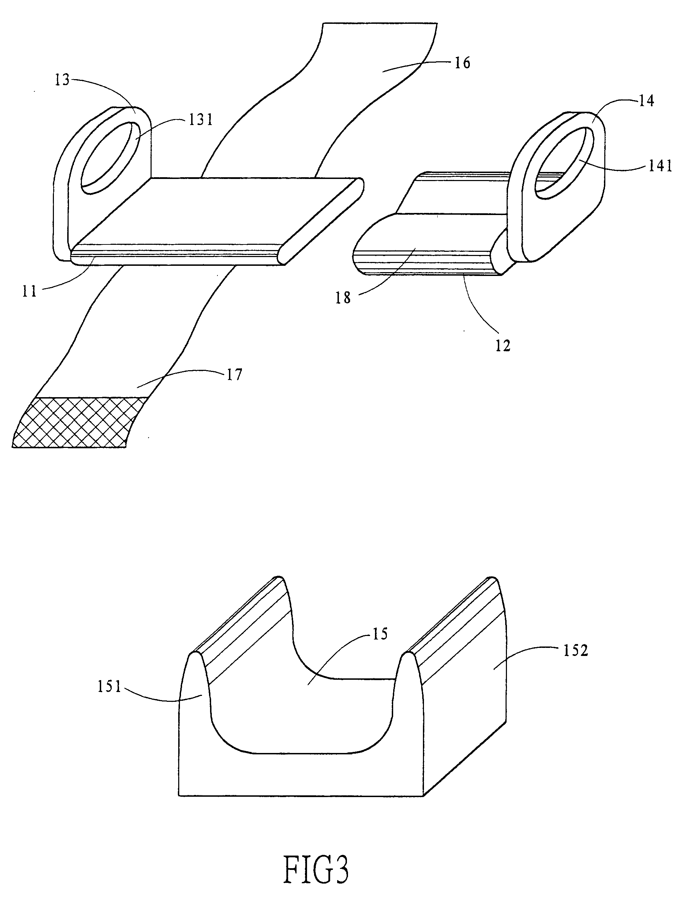

At first, With reference to Fig. 3, an exploded perspective view of the first embodiment of the pillow device in the present invention is illustrated therein. In this embodiment, the pillow device 10 includes a first retaining plate 11, a second retaining plate 12 and a cover liner 15. The lateral side of the first retaining plate 11 extends to be formed as a slightly vertical first supporting plate 13. The supporting plate 13 has a through hole 131. Sticky strips 16, 17 are arranged on the first retaining plate 11. The second retaining plate 12 is attached with a soft pad. An elevation angle adjuster 18 is arranged within the pad. The adjusting way of this elevation angle adjuster 18 may be an inflation type, an blowing type, or a mechanic type so as to be formed with an protrusion for adjusting the elevation angle and height for supporting the neck bone. The lateral side of the second retaining plate 12 extends out so as to be formed as a slightly vertical second supporting plate 14. The supporting plate 14 has a through hole 141. The first and second retaining plate 11, 12 have sticky surfaces which serve to combine the first and second retaining plate 11, and 12 together. The cover liner is made of soft material. After the first and second retaining plates 11 and 12 are combined, the left and right end portions 151, 152 of the liner can cover the first and second supporting plates 13 and 14, and thus the head of the passenger can be properly retained in the first supporting plate 13 and second supporting plate 14.

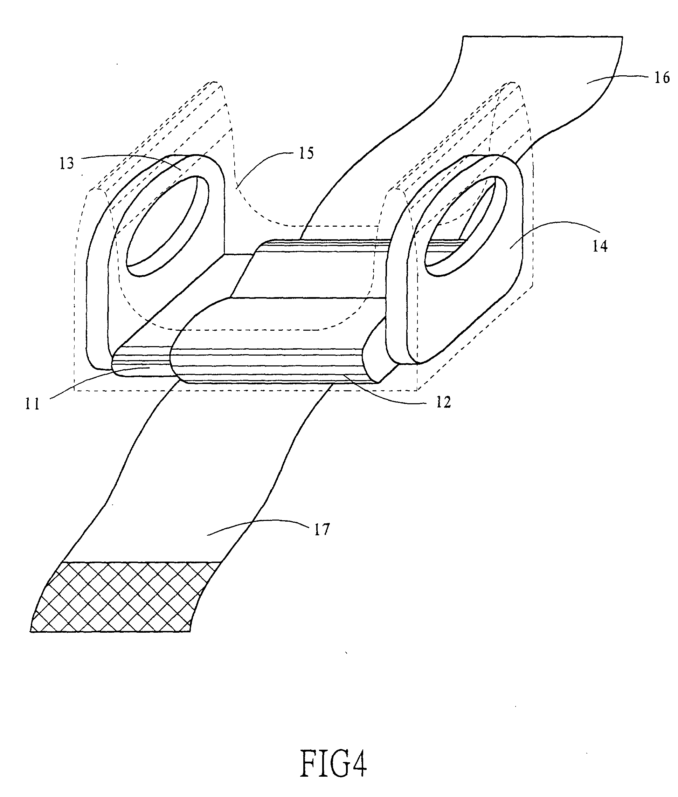

The attachment of the first retaining plate 11 and second retaining plate 12 will be further described herein. The upper surface of the bottom of the first retaining plate 11 and the lower surface of the second retaining plate 12 are arranged with sticky surfaces for sticking the two retaining plate together. After the two retaining plates 11, 12 are combined, the passenger may adjust the distance between the two supporting plates 13 and 14 for matching the width of the head. Referring to Fig. 4, a perspective view showing the combined first retaining plate 11 and second retaining plate 12 is illustrated. The dashed lines show the left and right end portions 151 and 152 of the cover liner 15 covering on the first and second supporting plates 13 and 14 so that the head of the passenger may retain between the first retaining plate 11 and second retaining plate 12 comfortably. The two through holes 131 and 141 are helpful to the hearing ability of the passenger.

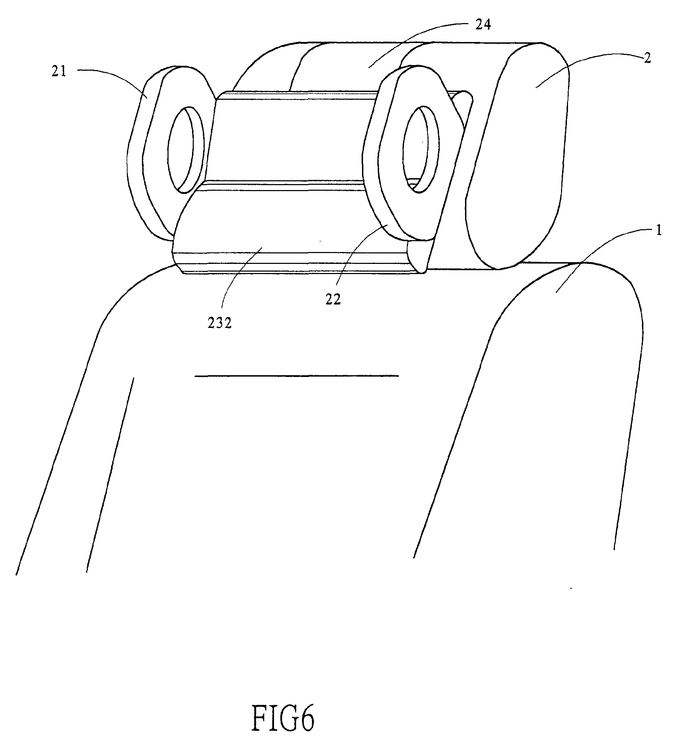

In using the pillow device according to first embodiment of the present invention, at first, the first retaining plate 11 is fixed to the pillow of a car seat by sticky strips 16 and 17. The sticky strips 16, 17 are place at upper and lower sides of the pillow and are sticky to one another at the rear side of the pillow so that the first retaining plate 11 tightly adheres to the front side of the pillow. Next, the elevation angle adjuster 18 of the second retaining plate 12 are adjusted, and by electrically charging or mechanically adjusting, a protrusion is formed. Then, the second retaining plate 12 is sticky to the first retaining plate 11 so that the two retaining plates 11, 12 are combined together. Finally, the cover liner 15 covers the two retaining plates 11, 12 as so to be formed with a combination shown in Fig. 6.

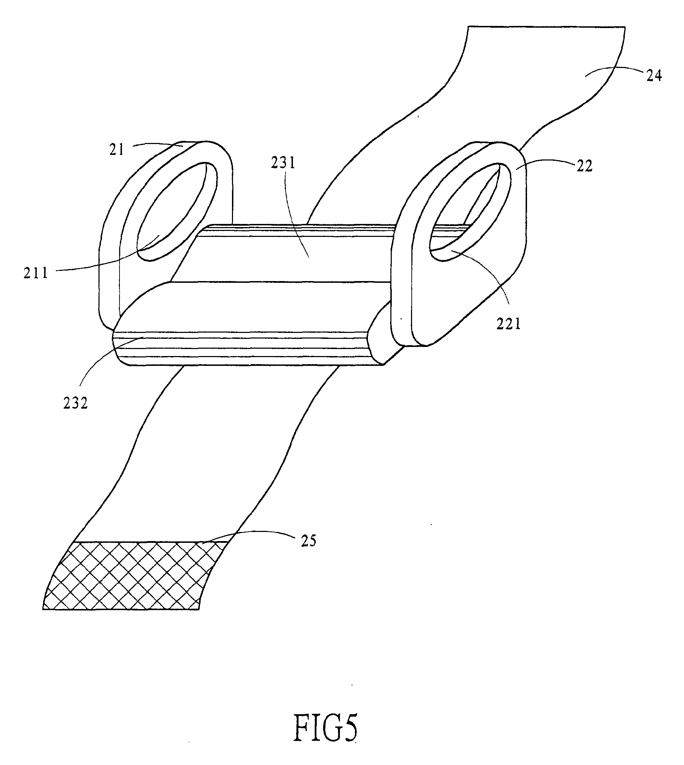

Referring to Fig. 5, a perspective view of the second embodiment of the present invention is illustrated. In this embodiment, from one lateral view, it is shown that the pillow device 20 has a 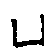 shape. A PVC material with a middle hardness and a thicker thickness is used as the material for supporting an air bag or a soft pad thereon. In a preferred embodiment of the present invention, a plastic sheet with a thickness of 0.5mm to 2mm and a hardness of 25 to 35 degrees is used as the material at the back sides of the bottom and two lateral sides, while a further plastic sheet with a thickness of 0.1mm to 1 mm and a hardness of 40 to 60 degrees is used as the material at the front sides of the bottom and two lateral sides. The pillow device 20 has a plane portion. Two ends thereof extend upwards to be formed with slightly vertical supporting plates 21 and 22. The inner surface of the two supporting plates 21 and 22 are attached with an electric charged air bag or a soft pad. The upper surface at the plane portion between the two supporting plates 21 and 22 has fixed soft pad 23 1 and a soft protrusion 232 for adjusting the elevation angle. The protruding height of the protrusion can be adjusted by an inflation or a mechanically way for supporting the head and neck of a passenger. The lower surface of the plane portion is installed with sticky strips 24 and 25 the use of which are identical to that of the sticky strips 16 and 17 in the first embodiment. Besides, the two supporting plates 21 and 22 are installed with through holes 211 and 221 for retaining the hearing ability of the passenger to be comfortable.

Now, referring to Fig. 6, in the use of the pillow device 20 according to second embodiment of the present invention, the pillow device 20 of the present invention can be fixed to the pillow 2 of a car seat 1 directly by the sticky strips 24, 25, and the pillow device 20 is retained in front of the pillow 2 so that the passenger may retain the head between two supporting plates 21 and 22 comfortably. Furthermore, the air bag or pad with a soft material at the inner surface thereof will sustain the head to resist against the pillow device comfortably. The comfortable protrusion 232 resists against the neck of the head so as to protect the neck portion.

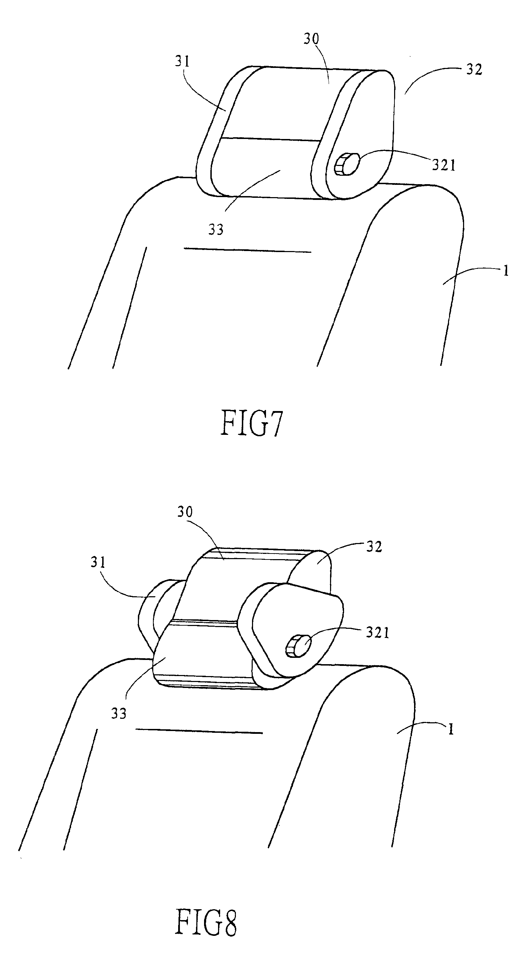

With reference to Figs. 7 and 8, perspective views of the pillow device according to the present invention used in the seat of a car before using and in using, respectively, are illustrated therein. In this embodiment of the present invention, the pillow of a car seat 1 is directly changed as a pillow device 30. At first, referring to Fig. 7, the pillow device 30 has a soft body. The left and right sides of the body have movable supporting plates 31 and 32. In this embodiment, two supporting plates 31, 32 are movably and rotatably fixed to the two lateral sides of the body by a fixing shaft 321. A protecting soft pad for protecting and fixing two sides of the neck bone is formed on the respective surface of the two supporting plates 31, 32. When the two supporting plates 31, 32 are rotated through one angle, stoppers are formed at two sides of the body so that the head of the passenger is retained between the two supporting plates 31, 32 to has an optimum pose. The neck portion will not bend laterally to press the nerve of the head. Besides, the lower side of the body of the pillow device is installed with a soft protrusion 33 for adjusting the elevation angle thereof. The embodying way of the protrusion 33 is by an inflation or a mechanic way to adjusting the height thereof for supporting the neck portion thereof.

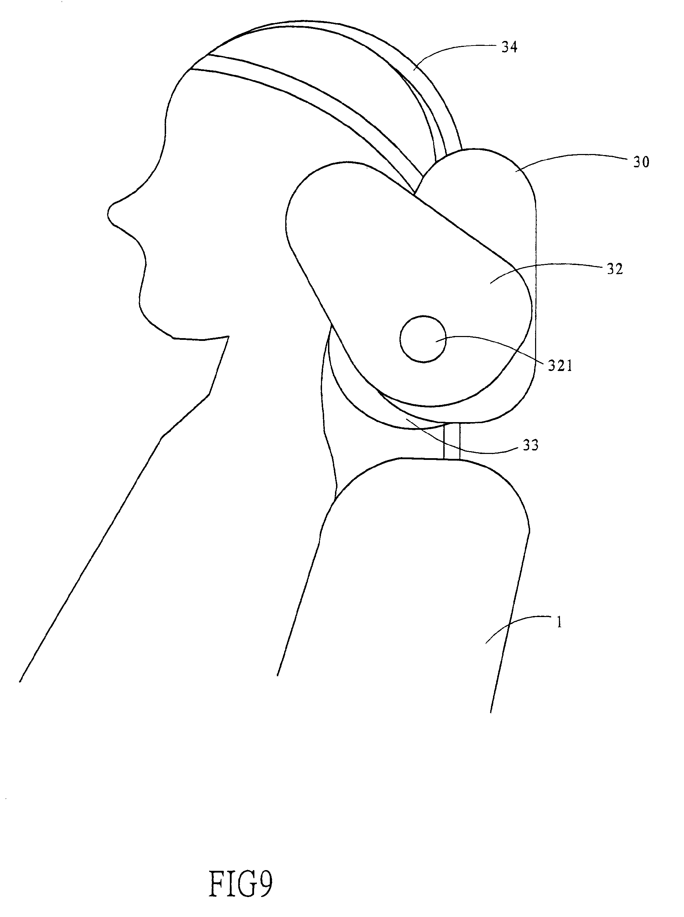

In order to increase the safety of a passenger which sleeps for a while when a car moves, other than the safety pillow device of the present invention, a further hat or head strip can be installed. With reference to the schematic view showing in Fig. 9, the aforesaid embodiments can be further arranged with a hat or head strip 34 at the pillow device. The hat or the head strip 34 can be separated from the pillow device, and if desired, it can be adhered to the pillow device through buckling rings or sticky strips. A telescopic device is installed at the connection between the hat or the head strip 34 and the pillow device in order to protect the passenger from colliding forwards due to an impact of the car, or to avoid the head to collide the top of the car.

Therefore, by the design of the hat and head strip, the force applied to the head due to a collision is reduced so that the head and neck are well protected. Besides, the sizes of the hat and head strip are adjustable for suiting the size of the passenger.

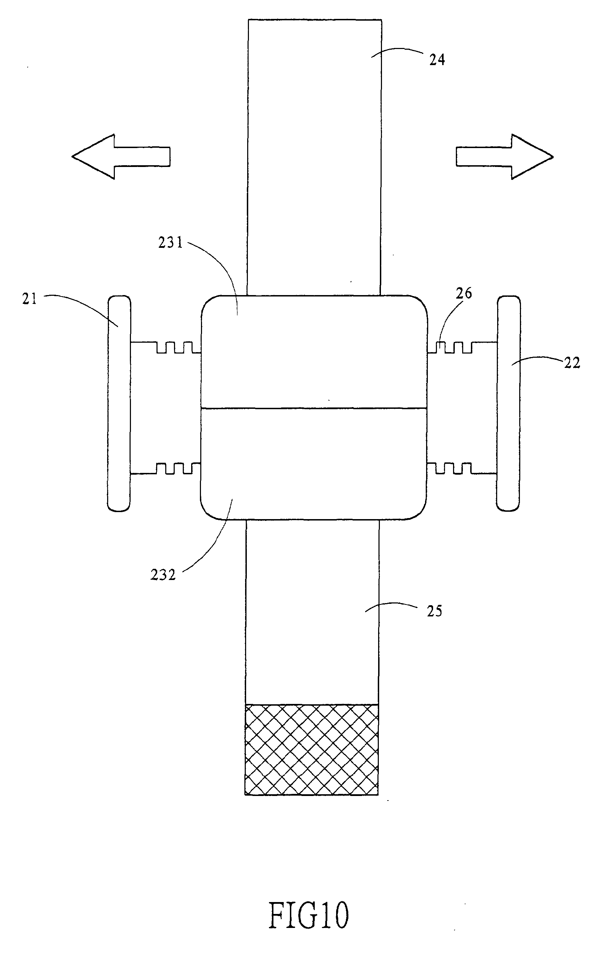

Although the present invention has been described with reference to the preferred embodiments, it will be understood that the invention is not limited to the details described thereof. Various substitutions and modifications have been suggested in the foregoing description, and others will occur to those of ordinary skill in the art. For example, in the design of the width of the pillow device, the two supporting plates at lateral sides can be designed to be adjustable and inclined inwards, so that the width therebetween is adjustable. If the cost is an important consideration, a simple hard sponge ear cover can be used. Two sponge covers enclose the left and right supporting air bags or soft bags so that the width of the pillow device become small for matching the head size of the passenger. Furthermore, according to the pillow device 20 in the second embodiment of the present invention, the supporting plates 21, 22 can be changed to become movable to cause the supporting plates 21, 22 each are combined with a sliding plate, as shown in Fig. 10; for example, the knife piece of an article knife, and then it is further coupled to the body of the soft pillow so that the two supporting plates 21 and 22 has a adjustable distance therebetween for meeting the requirement of the passenger. Therefore, all such substitutions and modifications are intended to be embraced within the scope of the invention as defined in the appended claims.

The pillow device according to the present invention not only has the original function of a pillow, but also may protect the head and neck of the passenger so as to improve the quality of sleep. The defect that the prior art pillow which can not well protect the head and neck of the passenger is effectively improved. The pillow device of the present invention has a simple structure. In embodying, it can easily combine with the seat of a car with a little cost.

## Claims

1. A pillow device capable of being fixed to a pillow of a seat of a car, characteristic in that:
the pillow device includes a first retaining plate and a second retaining plate which are formed with a first supporting plate and a second supporting plate, respectively; the first and second retaining plates are combined so as to be used to adjust the distance between the first and second supporting plates;
the first retaining plate has a sticky strip for retaining the first retaining plate to the pillow of the seat in a car; the second retaining plate has a protrusion with an adjustable elevation angle; the protrusion is positioned between the first supporting plate and the second supporting plate so that the head and neck of the passenger is retained between the two supporting plates and the protrusion serves to resist against the rear neck of the passenger.

2. A pillow device capable of being fixed to the pillow of a seat of a car, characteristic in that:
the pillow device is formed as a soft body, a protrusion is formed in the body between the two supporting plates as a supporter between two ends of the body and is adjustable in the elevation angle so that the head and neck of the passenger is retained between the two supporting plates and the protrusion serves to resist against the rear neck of the passenger.

3. The pillow device as claimed in claim 1, further comprising a soft cover liner; after the first retaining plate and second retaining plate are combined, this cover liner can cover thereon so that a soft contact surface is formed between the first supporting plate and second supporting plate.

4. The pillow device as claimed in claim 2, wherein the two supporting plates are combined with a sliding plate and then they are coupled to the body so that the distance of the two supporting plates are adjustable.

5. The pillow device as claimed in claim 1 or 2, wherein each supporting plate is formed with a through hole which is beneficial to the hearing ability as the head of the passenger is placed between the two supporting plates.

6. A pillow on a seat of a car, characteristic in that two lateral sides of the pillows are retained with rotatable supporting plates, respective; and a protrusion with an adjustable elevation angle is installed in the pillow; when the supporting plates rotate through an angle so that the head of the passenger can be retained between the two supporting plates; and the protrusion resists against the rear neck of the passenger.

7. The pillow on a seat of a car as claimed in claim 1, wherein each supporting plate is formed with a through hole which is beneficial to the hearing ability as the head of the passenger is placed between the two supporting plates.
